# EUROPÄISCHE PATENTSCHRIFT

(11) **EP 3 269 899 B1**
(45) Veröffentlichungstag und Bekanntmachung des Hinweises auf die Patenterteilung: **31.07.2019**
(21) Anmeldenummer: 17180716.7
(22) Anmeldetag: 11.07.2017
(51) Int. Cl.: E04H 1/12, B60P 3/32

(54) **STELZENHAUS**
STILT HOUSE
MAISON SUR PILOTIS

(30) Priorität: 11.07.2016 DE 102016112684
(43) Veröffentlichungstag der Anmeldung: 17.01.2018
(73) Patentinhaber: Werts, Thomas, 89293 Kellmünz an der Iller (DE)
(72) Erfinder: Werts, Thomas, 89293 Kellmünz an der Iller (DE)
(74) Vertreter: Meitinger, Thomas Heinz

(56) Entgegenhaltungen:
- US-A- 4 719 716
- US-A1- 2013 118 540
- US-A1- 2014 083 023
- US-A1- 2015 027 067

## Beschreibung

### GEBIET DER ERFINDUNG

Die vorliegende Erfindung betrifft ein Stelzenhaus zur Aufnahme von Personen.

### HINTERGRUND DER ERFINDUNG

Im Stand der Technik sind provisorische Container, beispielsweise zur Unterbringung von Personen oder für Meetings, bekannt. Es handelt sich dabei typischerweise um quaderförmige Gebilde.

### ZUSAMMENFASSUNG DER ERFINDUNG

Eine quaderförmige Ausbildung eines provisorischen Konferenzraums stellt für ein Meeting mit vielen Personen eine unvorteilhafte Form dar. Durch die eher längliche Ausbildung können nur Meetings mit relativ wenigen Personen durchgeführt werden. US 4 719 716 A beschreibt ein Stelzenhaus nach dem Oberbegriff des Anspruchs 1. Eine Aufgabe ist daher, einen geschützten Innenraum auszubilden, der schnell aufgebaut werden kann und ein Meeting für eine möglichst große Anzahl von Personen ermöglicht.

Als erste Ausführungsform wird ein Stelzenhaus mit den Merkmalen nach Anspruch 1 zur Verfügung gestellt, wobei das Stelzenhaus zur Aufnahme von Personen dient, der Grundkörper des Stelzenhauses kreisrund bzw. nahezu kreisrund, insbesondere Ufo-artig, ausgebildet ist und Rahmenelemente und Wandelemente umfasst. Das Stelzenhaus ist weiterhin ein Konferenzraum, wobei der Grundkörper auf Beinen/Stelzen angeordnet ist, sodass ein Fahrzeug, insbesondere ein Truck, ein Anhänger oder ein Pickup, unter den Grundkörper fahren kann und das Stelzenhaus aufnehmen kann und das Stelzenhaus weist Bodenklappen zum Einstieg auf.

Vorteilhafterweise ist der Grundkörper der Erfindung vollständig symmetrisch und daher aus den stets gleichen Bauteilen zusammengesetzt. Damit ist die Anzahl der verschiedenen Bauteile sehr gering, wodurch sich ein unkomplizierter und damit sehr schneller Aufbau des Stelzenhauses ergibt. Erfindungsgemäß weist das Stelzenhaus durch seine runde Ausbildung des Grundkörpers ein futuristisches Aussehen auf, wodurch Aufmerksamkeit erregt werden kann. Das Stelzenhaus kann damit seine Funktion als Treffpunkt besser erfüllen. Das Stelzenhaus kann 3, 4, 5, 6, 7, 8 oder beliebig viele Rahmenelemente aufweisen.

Beispielhafte Ausführungsformen werden in den abhängigen Ansprüchen beschrieben.

Gemäß der Erfindung wird ein Stelzenhaus zur Verfügung gestellt, wobei der Grundkörper auf Beinen/Stelzen angeordnet ist, sodass ein Fahrzeug, insbesondere ein Truck, ein Anhänger oder ein Pickup, unter den Grundkörper fahren kann und das Stelzenhaus aufnehmen kann.

Der Innenraum des Stelzenhauses ist auf 3, 4, 5, 6 oder beliebig vielen Beinen/Stelzen gelagert, wobei die Beine derart angeordnet sein können, dass ein Truck bzw. ein Anhänger eines LKW bzw. ein Pickup unter den Grundkörper fahren kann und das Stelzenhaus aufnehmen kann. Hierdurch ist ein Transport des Stelzenhauses im aufgebauten Zustand möglich.

In einer weiteren erfindungsgemäßen Ausführungsform wird ein Stelzenhaus zur Verfügung gestellt, wobei der Grundkörper des Stelzenhauses symmetrisch ausgebildet ist.

Durch die symmetrische Ausbildung kann der Grundkörper des Stelzenhauses im Wesentlichen aus Rahmenelementen und Wandelementen aufgebaut werden. Hierdurch ergibt sich eine unkomplizierte Aufbauweise.

Gemäß einem weiteren Ausführungsbeispiel der vorliegenden Erfindung wird ein Stelzenhaus zur Verfügung gestellt, wobei der Grundkörper Fenster und/oder Türen umfasst.

Gemäß einer beispielhaften Ausführungsform der Erfindung wird ein Stelzenhaus zur Verfügung gestellt, wobei die Rahmenelemente an einem oberen und einem unteren Ring zusammengeführt werden.

In einer weiteren erfindungsgemäßen Ausführungsform wird ein Stelzenhaus zur Verfügung gestellt, wobei auf dem oberen Ring eine Abdeckung, insbesondere aus Glas/Plexiglas/Kunststoffglas, angeordnet ist.

Durch die "Lichtkuppel" ergibt sich innerhalb des Stelzenhauses ein freundliches Ambiente.

Gemäß einem weiteren Ausführungsbeispiel der vorliegenden Erfindung wird ein Stelzenhaus zur Verfügung gestellt, wobei am unteren Ring die Bodenklappen zum Abschließen der Öffnung des unteren Rings vorgesehen sind.

Gemäß einer beispielhaften Ausführungsform der Erfindung wird ein Stelzenhaus zur Verfügung gestellt, wobei innerhalb des Grundkörpers Sitzelemente und/oder Tischelemente angeordnet sind.

Gemäß einem weiteren Ausführungsbeispiel der vorliegenden Erfindung wird ein Stelzenhaus zur Verfügung gestellt, wobei die Rahmenteile gegenüber den Wandelementen hervorgehoben oder eben oder zurückversetzt ausgebildet sind.

Gemäß einer beispielhaften Ausführungsform der Erfindung wird ein Stelzenhaus zur Verfügung gestellt, wobei die Beine an dem Grundkörper angeordnet sind, wobei die Beine benachbart zum Grundkörper verjüngend ausgebildet sind.

Als eine Idee der Erfindung kann angesehen werden, ein Stelzenhaus mit einem vollständig symmetrischen Innenraum zur Verfügung zu stellen. Hierdurch kann ein Meetingraum/Konferenzraum für eine maximale Anzahl von Personen bei einem begrenzten Raumvolumen zur Verfügung gestellt werden. Durch die vollständig symmetrische Ausführung des Stelzenhauses kann die Anzahl der unterschiedlichen Bauteile des Stelzenhauses minimiert werden. Hierdurch wird ein sehr einfacher Aufbau des Stelzenhauses ermöglicht.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
Fig. 1 eine perspektivische Darstellung eines Gartenhauses/Spielhauses/Stelzenhauses,
Fig. 2 einen ersten Aufbauschritt des Gartenhauses/Spielhauses/Stelzenhauses,
Fig. 3 einen weiteren Aufbauschritt mit 12 Rahmenelementen und einem oberen und unteren Ring 1, 8 als Abschlussstück,
Fig. 4 einen noch weiteren Aufbauschritt mit Bodenelementen 10,
Fig. 5 einen Aufbauschritt mit Bodenklappen 11,
Fig. 6 eine Draufsicht mit Wandelementen 3 und Sitzelementen 13,
Fig. 7 eine Schnittdarstellung des Stelzenhauses,
Fig. 8 eine alternative Ausführung des Stelzenhauses mit innenliegenden Rahmenelementen,
Fig. 9 ein Dach 14 des Stelzenhauses mit Befestigungselementen 15 und
Fig. 10 ein Bein 6 des Stelzenhauses mit einer Verjüngung 16.

### DETAILLIERTE BESCHREIBUNG BEISPIELHAFTER AUSFÜHRUNGSFORMEN

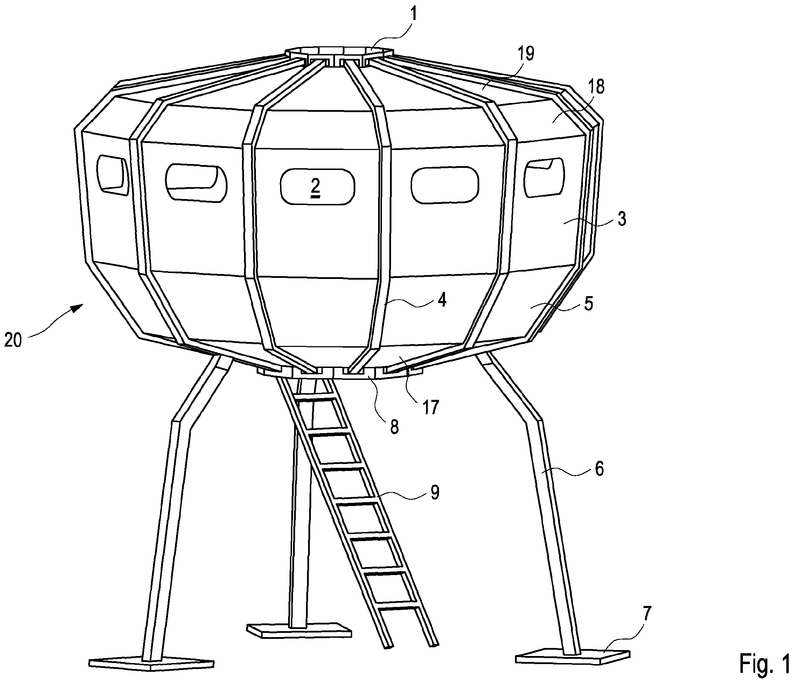

Fig. 1 zeigt eine perspektivische Darstellung eines Gartenhauses/Spielhauses/Stelzenhauses mit Rahmenteilen/Rahmenelementen 4, wobei zwischen den Rahmenelementen 4 Wandelemente 3, 5, 17, 18 und 19 eingefügt werden können. Die Rahmenteile 4 werden über einen oberen Ring 1 und einen unteren Ring 8 abgeschlossen. Innerhalb des sich so ausgebildeten Raums können Dinge gelagert werden bzw. sich Menschen aufhalten. Das Stelzenhaus ist auf Beinen 6 mit Auflagen 7 gelagert, wobei das Stelzenhaus beispielsweise drei Beine 6 aufweisen kann. Mittels einer Leiter 9 kann der Innenraum des Stelzenhauses erreicht werden.

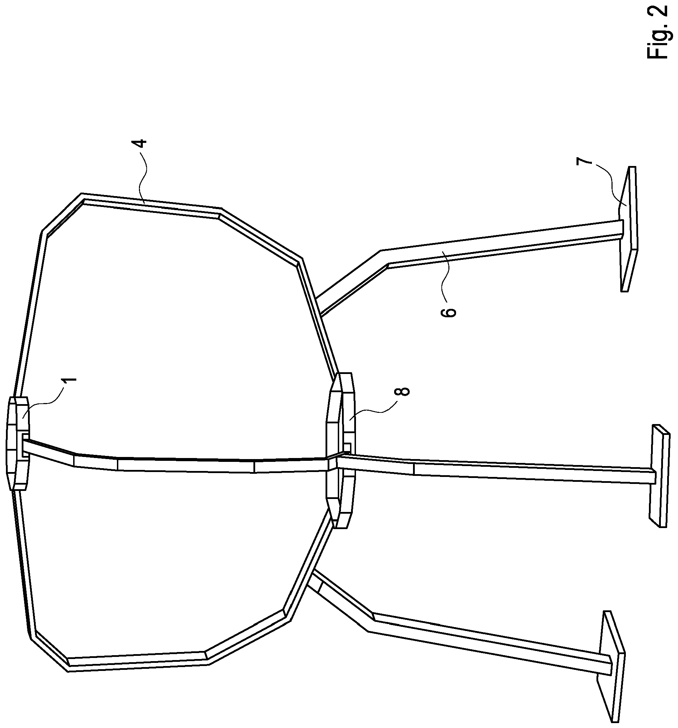

Fig. 2 zeigt einen ersten Aufbauschritt des Gartenhauses/Spielhauses/Stelzenhauses mit drei Rahmenelementen 4 und dem unteren und dem oberen Ring 1, 8 zum Abschluss.

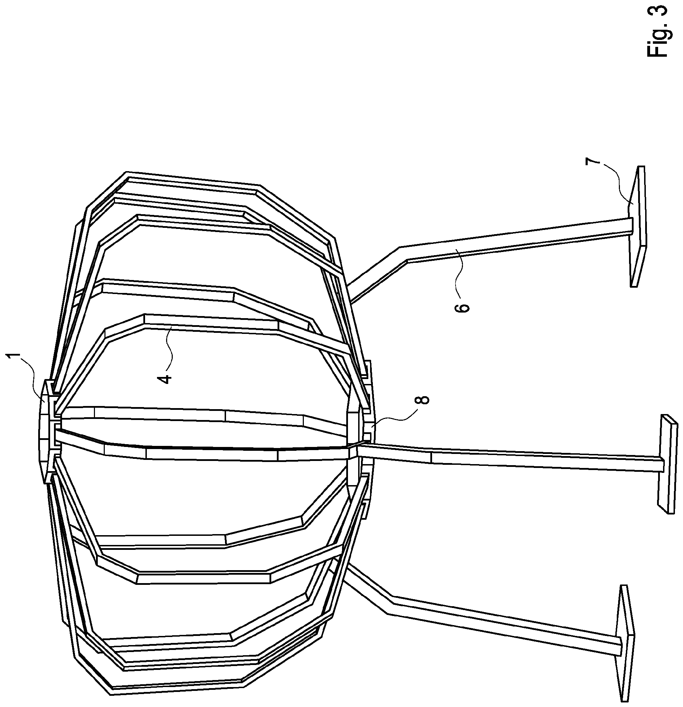

Fig. 3 zeigt einen weiteren Aufbauschritt mit 12 Rahmenelementen und einem oberen und unteren Ring 1, 8 als Abschlussstück, wobei die Ringe 1, 8 als 12-Ecke ausgebildet sein können.

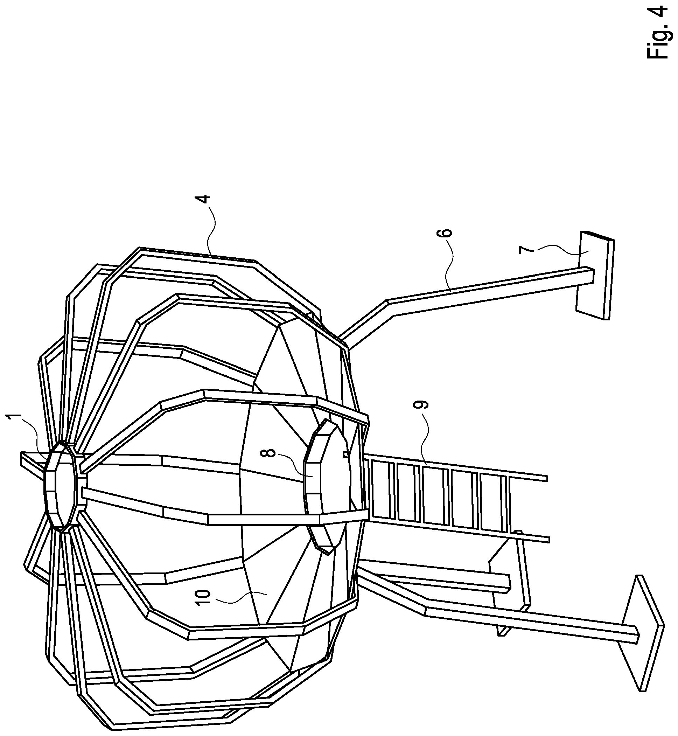

Fig. 4 zeigt einen noch weiteren Aufbauschritt mit Bodenelementen 10, wobei das Stelzenhaus eine Leiter 9 aufweisen kann, die den Zugang zu dem Stelzenhaus ermöglicht.

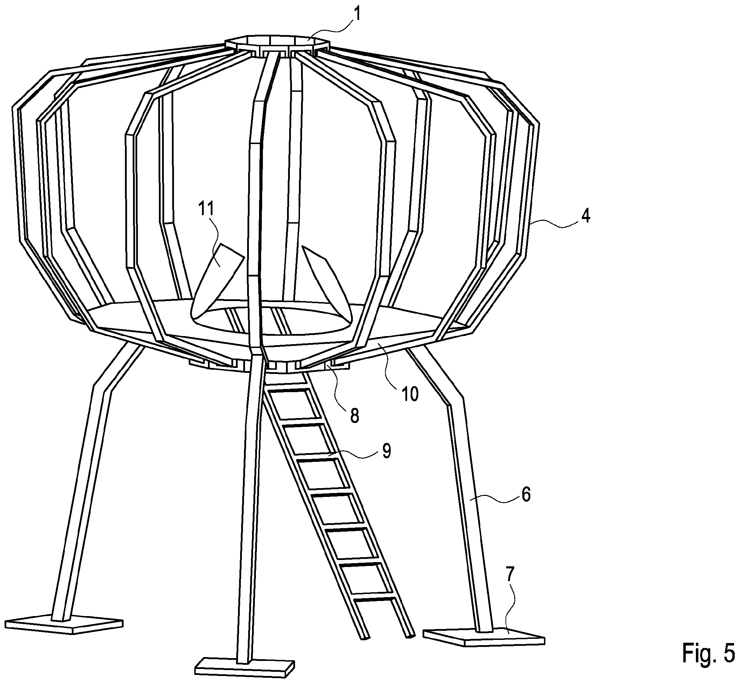

Fig. 5 zeigt einen Aufbauschritt mit Bodenklappen 11, wobei die Bodenklappen 11 dazu dienen, den Innenraum des Stelzenhauses abzudichten bzw. abzuschließen.

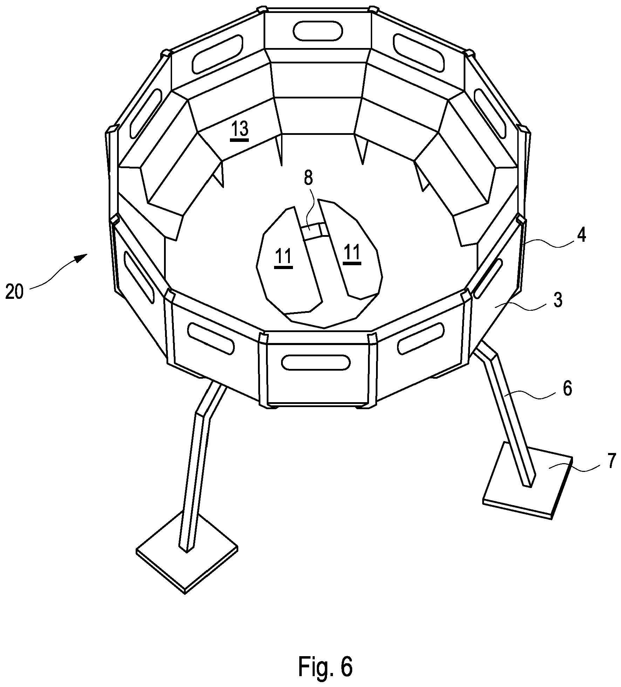

Fig. 6 zeigt eine Draufsicht mit Wandelementen 3 und Sitzelementen 13. Außerdem sind Öffnungsklappen 11 dargestellt, die einen Zugang zu dem Innenraum des Stelzenhauses ermöglichen. Durch die zentrale Anordnung der Bodenklappen 11 können die inneren Wandbereiche des Grundkörpers komplett mit Sitzmöglichkeiten 13 ausgerüstet werden. Vorteilhafterweise ergibt sich dadurch eine maximale Anzahl an Sitzmöglichkeiten 13.

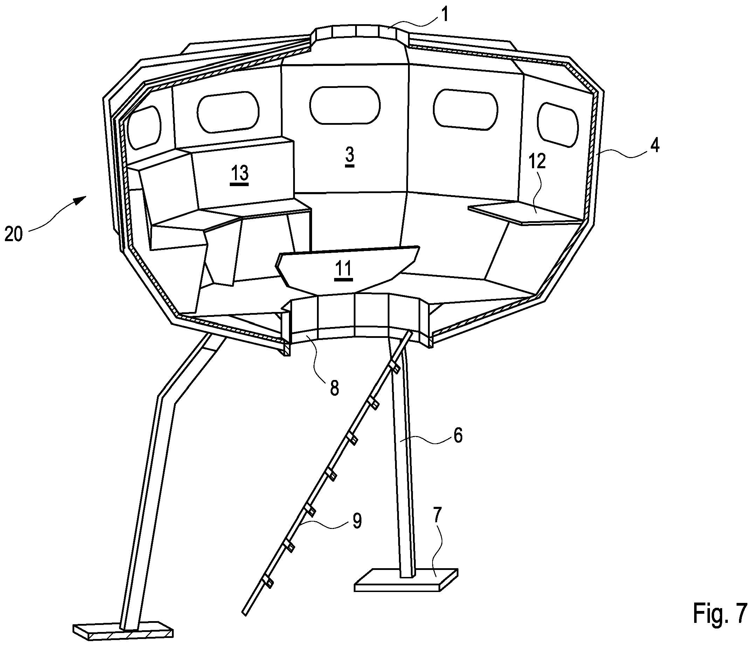

Fig. 7 zeigt eine Schnittdarstellung des Stelzenhauses, mit Wandelementen 3, Sitzmöglichkeiten 13 und einem Tisch 12. Insbesondere können die Rahmenelemente 4 als hervorragend bzw. erhaben bzw. hervortretend gegenüber den Wandelementen 3 ausgebildet sein.

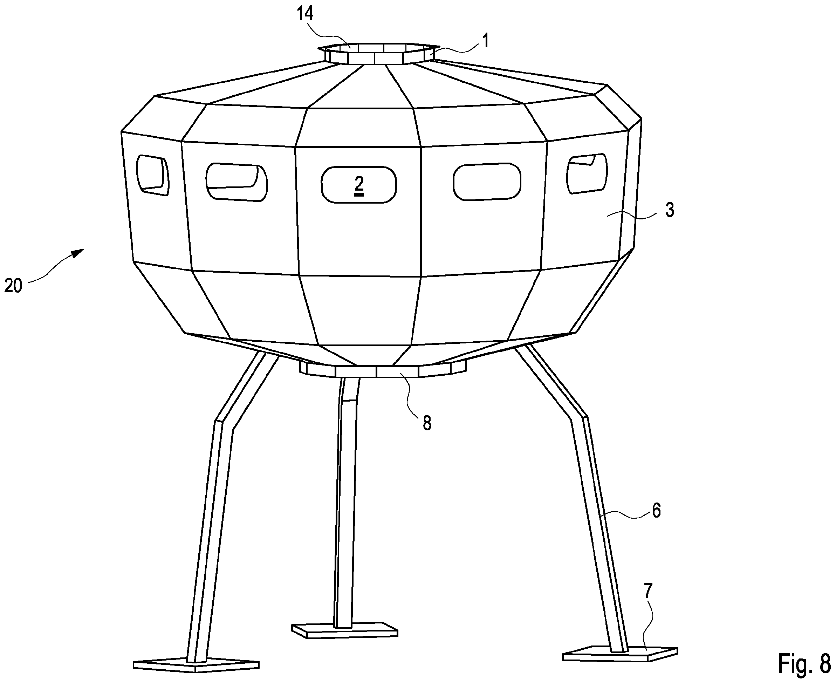

Fig. 8 zeigt eine alternative Ausführung des Stelzenhauses mit innenliegenden Rahmenelementen. Hierdurch können die Rahmenelemente zu einer besseren Dämmung des Innenraums des Grundkörpers des Stelzenhauses genutzt werden. Das Stelzenhaus weist außerdem eine Abdeckung 14 des oberen Rings 1 auf. Die Abdeckung 14 kann insbesondere aus Glas ausgebildet sein, wodurch sich im Innenraum des Stelzenhauses ein angenehmes Ambiente ergeben kann.

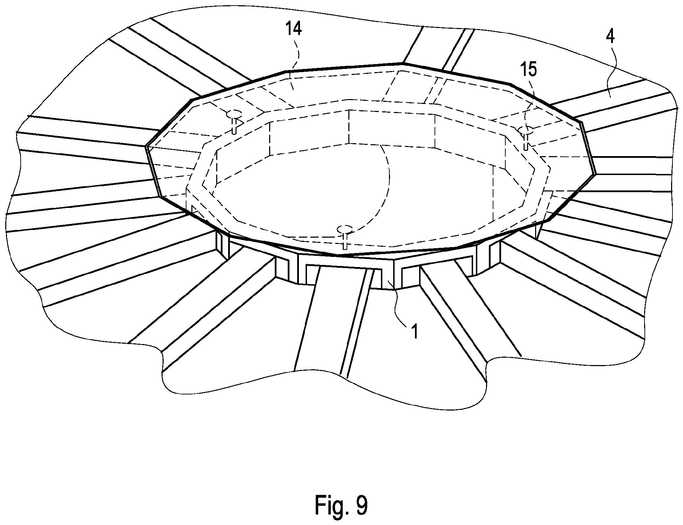

Fig. 9 zeigt das Dach bzw. die Abdeckung 14 des Stelzenhauses mit Befestigungselementen 15, die an den Rahmenelementen 4 befestigt sind.

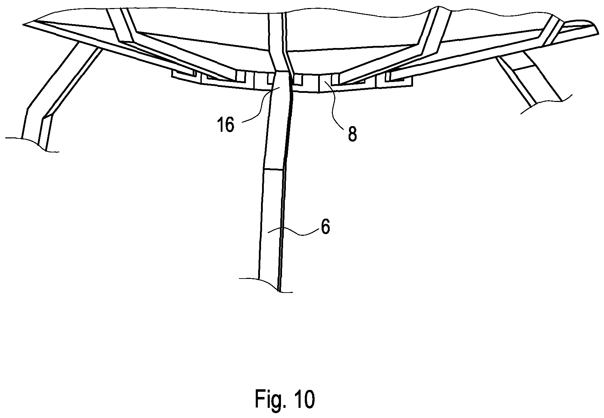

Fig. 10 zeigt ein Bein 6 des Stelzenhauses mit einer Verjüngung 16.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 1: Ring
- 2: Fenster
- 3: Wandelement
- 4: Rahmenteil/Rahmenelement
- 5: Wandelement
- 6: Bein
- 7: Auflage
- 8: Ring
- 9: Leiter
- 10: Bodenelement
- 11: Bodenklappe
- 12: Tischelement
- 13: Sitzelement
- 14: Dachelement
- 15: Befestigungselement
- 16: Verjüngung
- 17: Wandelement
- 18: Wandelement
- 19: Wandelement
- 20: Grundkörper

## Patentansprüche

1. Stelzenhaus zur Aufnahme von Personen, wobei der Grundkörper (20) des Stelzenhauses kreisrund bzw. nahezu kreisrund, insbesondere Ufo-artig, ausgebildet ist, wobei der Grundkörper (20) Rahmenelemente (4) und Wandelemente (3, 5, 17, 18, 19) umfasst, wobei das Stelzenhaus ein Konferenzraum ist und wobei der Grundkörper (20) auf Beinen/Stelzen (6) angeordnet ist, sodass ein Fahrzeug, insbesondere ein Truck, ein Anhänger oder ein Pickup, unter den Grundkörper (20) fahren kann und das Stelzenhaus aufnehmen kann, **dadurch gekennzeichnet, dass** das Stelzenhaus Bodenklappen (11) zum Einstieg aufweist.

2. Stelzenhaus nach Anspruch 1, **dadurch gekennzeichnet, dass** der Grundkörper (20) des Stelzenhauses symmetrisch ausgebildet ist.

3. Stelzenhaus nach einem der Ansprüche 1 oder 2, **dadurch gekennzeichnet, dass** der Grundkörper (20) Fenster (2) und/oder Türen umfasst.

4. Stelzenhaus nach einem der vorhergehenden Ansprüche, **dadurch gekennzeichnet, dass** die Rahmenelemente (4) an einem oberen und einem unteren Ring (1,8) zusammengeführt werden.

5. Stelzenhaus nach dem vorhergehenden Anspruch, **dadurch gekennzeichnet, dass** auf dem oberen Ring (1) eine Abdeckung (14), insbesondere aus Glas/Plexiglas/Kunststoffglas, angeordnet ist.

6. Stelzenhaus nach einem der Ansprüche 4 oder 5, **dadurch gekennzeichnet, dass** am unteren Ring (8) die Bodenklappen (11) zum Abschließen der Öffnung des unteren Rings (8) vorgesehen sind.

7. Stelzenhaus nach einem der vorhergehenden Ansprüche, **dadurch gekennzeichnet, dass** innerhalb des Grundkörpers (20) Sitzelemente (13) und/oder Tischelemente (12) angeordnet sind.

8. Stelzenhaus nach einem der vorhergehenden Ansprüche, **dadurch gekennzeichnet, dass** die Rahmenteile (4) gegenüber den Wandelementen (3, 5, 17, 18, 19) hervorgehoben oder eben oder zurückversetzt ausgebildet sind.

9. Stelzenhaus nach einem der vorhergehenden Ansprüche, **dadurch gekennzeichnet, dass** die Beine (6) an dem Grundkörper (20) angeordnet sind, wobei die Beine (6) benachbart zum Grundkörper (20) verjüngend ausgebildet sind.

## Claims

1. Stilt house for the accommodation of people, wherein the main body (20) of the stilt house is circular or almost circular, in particular UFO-shaped, wherein the main body (20) comprises frame elements (4) and wall elements (3, 5, 17, 18, 19), wherein the stilt house is a conference room, wherein the main body (20) is arranged on legs/stilts (6) so that a vehicle, in particular a lorry, a trailer or a pickup truck, can drive under the main body (20) and can pick up the stilt house, **characterized in that** the stilt house has trapdoors (11) for entry purposes.

2. Stilt house according to claim 1, **characterized in that** the main body (20) of the stilt house is symmetrical.

3. Stilt house according to one of claims 1 or 2, **characterized in that** the main body (20) includes windows (2) and/or doors.

4. Stilt house according to one of the preceding claims, **characterized in that** the frame elements (4) are joined at an upper and a lower ring (1, 8).

5. Stilt house according to the preceding claim, **characterized in that** a cover (14), in particular made of glass/perspex/synthetic glass, is arranged on the upper ring (1).

6. Stilt house according to one of claims 4 or 5, **characterized in that** the trapdoors (11) are provided on the lower ring (8) for closing the opening of the lower ring (8).

7. Stilt house according to one of the preceding claims, **characterized in that** seating elements (13) and/or table elements (12) are arranged inside the main body (20).

8. Stilt house according to one of the preceding claims, **characterized in that** the frame parts (4) are designed to protrude, to be flush or to be set back with respect to the wall elements (3, 5, 17, 18, 19).

9. Stilt house according to one of the preceding claims, **characterized in that** the legs (6) are arranged on the main body (20), wherein the legs are designed to taper adjacent to the main body (20).

## Revendications

1. Maison sur jambages pour l'accueil de personnes, le corps de base (20) de ladite maison sur jambages étant prévu rond ou sensiblement rond, en particulier à la manière d'un OVNI, ledit corps de base (20) comprenant des éléments de structure (4) et des éléments de paroi (3, 5, 17, 18, 19),
ladite maison sur jambages étant une salle de conférences et le corps de base (20) étant monté sur des appuis/des jambages (6), de sorte qu'un véhicule, en particulier un camion, une remorque ou un pick-up, peut circuler en dessous du corps de base (20) et supporter la maison sur jambages, **caractérisée en ce que** ladite maison sur jambages présente des volets de fond (11) pour l'entrée.

2. Maison sur jambages selon la revendication 1, **caractérisée en ce que** le corps de base (20) de la maison sur jambages est réalisé de manière symétrique.

3. Maison sur jambages selon la revendication 1 ou la revendication 2, **caractérisée en ce que** le corps de base (20) présente des fenêtres (2) et/ou des portes.

4. Maison sur jambages selon l'une des revendications précédentes, **caractérisée en ce que** les éléments de structure (4) sont rattachés à un anneau supérieur et à un anneau inférieur (1, 8).

5. Maison sur jambages selon la revendication précédente, **caractérisée en ce qu'**une couverture (14), en particulier en verre/plexiglas/verre synthétique est disposée sur l'anneau supérieur (1).

6. Maison sur jambages selon la revendication 4 ou la revendication 5, **caractérisée en ce que** les volets de fond (11) sont prévus sur l'anneau inférieur (8) pour la fermeture et l'ouverture de l'anneau inférieur (8).

7. Maison sur jambages selon l'une des revendications précédentes, **caractérisée en ce que** des éléments de siège (13) et /ou des éléments de table (12) sont disposés à l'intérieur du corps de base (20).

8. Maison sur jambages selon l'une des revendications précédentes, **caractérisée en ce que** les éléments de structure (4) sont réalisés en saillie, ou affleurants, ou renfoncés par rapport aux éléments de paroi (3, 5, 17, 18, 19).

9. Maison sur jambages selon l'une des revendications précédentes, **caractérisée en ce que** les jambages (6) sont disposés contre le corps de base (20), lesdits jambages (6) étant amincis à proximité du corps de base (20).
